(19) Europäisches Patentamt

European Patent Office

Office européen des brevets

(11) EP 0 691 732 B1

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int Cl.⁶: **H02P 5/40**, H02P 6/22, H02P 6/06

(21) Anmeldenummer: **94110537.1**

(22) Anmeldetag: **06.07.1994**

(54) **Betriebsverfahren für einen Wechselrichter, der einen Einphasen-Synchronmotor mit permanenterregtem Rotor speist**

Method for operating an inverter feeding a single-phase synchronous motor with permanently excited rotor

Procédé pour opérer un onduleur alimentant un moteur synchrone monophasé avec rotor excité en permanence

(84) Benannte Vertragsstaaten:
**DE FR GB IT**

(43) Veröffentlichungstag der Anmeldung:
**10.01.1996 Patentblatt 1996/02**

(73) Patentinhaber: **SIEMENS AKTIENGESELLSCHAFT**
**80333 München (DE)**

(72) Erfinder:
• **Klein, Hans-Wilhelm**
**D-97078 Würzburg (DE)**
• **Schmidt, Thomas**
**D-33611 Bielefeld (DE)**
• **Steinmann, Ulrich**
**D-32549 Bad Oeynhausen (DE)**

(56) Entgegenhaltungen:
EP-A- 0 163 328          EP-A- 0 358 805
DE-A- 3 841 147          DE-A- 4 012 561

• PATENT ABSTRACTS OF JAPAN vol. 10, no. 213 (E-422) (2269) 25. Juli 1986 & JP-A-61 052 182 (MATSUSHITA ELECTRIC IND CO LTD) 14. März 1986

**Beschreibung**

Die Erfindung betrifft ein Betriebsverfahren für einen Wechselrichter, der einen Einphasen-Synchronmotor mit permanenterregtem Rotor speist.

Einphasen-Synchronmotoren mit permanenterregtem Rotor werden aufgrund ihres einfachen Aufbaus in zunehmendem Maße in der Konsumgüterindustrie zum Antrieb von Elektrogeräten kleiner Leistung eingesetzt; sie werden üblicherweise direkt aus dem Wechselstromnetz betrieben und finden z.B. bevorzugt Anwendung zum Antrieb von Laugenpumpen für Waschmaschinen. Das Einsatzgebiet derartiger Einphasen-Synchronmotoren ist jedoch, insbesondere auch aufgrund ihres dynamischen Verhaltens, auf kleinere Leistungen bis maximal 50 Watt begrenzt.

Aufgabe der vorliegenden Erfindung ist es, das Einsatzgebiet von Einphasen-Synchronmotoren auch auf größere Leistungen, z.B. bis 100 Watt, und damit z.B. auch zur vorteilhaften Anwendung von Pumpenantrieben in Geschirrspülern zu erweitern, wobei ein stabiles dynamisches Verhalten bei definierbarem maximalem Motorstrom und die Ansteuerung einer definierten Drehrichtung gewährleistet sein sollen.

Die Lösung dieser Aufgabe gelingt erfindungsgemäß durch die Lehre des Anspruchs 1; vorteilhafte Ausgestaltungen der Erfindung sind jeweils Gegenstand der Unteransprüche.

Durch die Ansteuerung des Einphasen-Synchronmotors über einen einphasigen Wechselrichter mit vorzugsweise eingangsseitig eingeprägter Gleichspannung und einer Regelung basierend auf der Vorgabe einer Strom-Drehzahl-Kennlinie im Sinne eines Gleichstrom-Nebenschlußmotor-Verhaltens läßt sich das dynamische Verhalten des Einphasen-Synchronmotors im stationären Zustand auch bei größerer Lastankopplung, insbesondere unter Vermeidung von Schwankungen der mittleren Winkelgeschwindigkeit, stabilisieren. Durch den Betrieb des Einphasen-Synchronmotors an dem Wechselrichter über einen vorgeschalteten Gleichspannungszwischenkreis bzw. bei Verwendung eines entsprechenden Umrichters wird eine Entkopplung vom z.B. speisenden Haushalts-Wechselspannungsnetz und insbesondere dessen Frequenz erreicht, wodurch ein Einheitsantriebssystem auch für unterschiedliche speisende Wechselspannungsfrequenzen erreichbar und auf einfache Weise eine Drehzahlregelung möglich ist. Bei Einsatz als Bordantrieb in Kraftfahrzeugen können derartige Motoren ohne Vorschaltung von Gleichrichtern und Glättungsgliedern direkt an das bordeigene Gleichspannungsnetz angeschlossen werden.

Zweckmäßigerweise ist die vorgegebene Motorstrom-Drehzahl-Kennlinie insbesondere durch zwei Eckwerte, nämlich einerseits durch den maximalen Motorstrom im Kurzschluß- bzw. Einschaltzustand und andererseits durch eine maximale Drehzahl im Leerlaufzustand des Einphasen-Synchronmotors definiert; anstelle eines Kurzschlußstrom-Eckwertes kann es auch von Vorteil sein, den maximalen Ständerstrom vorzugeben, bei dessen Überschreiten der permanenterregte Rotor ansonsten demagnetisiert werden könnte. Zwischen diesen Eckwerten kann die Kennlinie in Anpassung an die jeweiligen lastseitigen Erfordernisse bzw. Auslegung des Einphasen-Synchronmotors verlaufen. Eine bevorzugte, regeltechnisch besonders einfache Kennlinie ist nach einer Ausgestaltung der Erfindung durch einen linearen Verlauf gekennzeichnet.

Eine besonders aufwandsarme Regelvorrichtung ergibt sich, wenn die für die Ansteuerung des Wechselrichters notwendigen Istwerte für die Rotordrehzahl und die Rotorlage relativ zum Statorfeld aus einer, von dem Rotor bei dessen Drehung in einem Spannungssensor, insbesondere einer Meßspule, induzierten Spannung gewonnen werden.

Um auf einfache Weise beim erstmaligen Einschalten des Einphasen-Synchronmotors überhaupt ein hinreichendes Anlaufmoment zu gewährleisten, ist durch statorseitige konstruktive Maßnahmen ein sogenannter magnetische Engstelle derart vorgesehen, daß sich die Rotorfeldachse bei nichtbestromter Statorwicklung in Umfangsrichtung um einen bestimmten Winkel gegenüber der Statorfeldachse bei bestromter Statorwicklung einstellt; derartige Maßnahmen, insbesondere in Form von gestuften Polbögen bzw. im Statorblechpaket vorgesehenen, den Magnetfluß hindernden Ausstanzungen, sind z.B. durch die EP-B1-0 358 805 bekannt.

Die Erfindung sowie weitere vorteilhafte Ausgestaltungen der Erfindung gemäß Merkmalen der Unteransprüche sind im folgenden anhand schematischer Darstellungen des Motoraufbaus sowie eines Blockschaltbildes einer Steuer- bzw. Regelvorrichtung für einen solchen Motor in der Zeichnung näher beschrieben; darin zeigen:

FIG 1   den radialen Querschnitt durch einen Einphasen-Synchronmotor mit unsymmetrischem Blechschnitt, konstantem Luftspalt und einer luftspaltseitigen Ausstanzung zur Bildung einer Engstelle,

FIG 2   den radialen Querschnitt durch einen Einphasen-Synchronmotor mit unsymmetrischem Blechschnitt, gestuftem Luftspalt und einer luftspaltseitigen Ausstanzung zur Bildung einer magnetischen Engstelle,

FIG 3   den radialen Querschnitt durch einen Einphasen-Synchronmotor mit unsymmetrischem Blechschnitt, gestuftem Luftspalt und einer polrandseitigen Ausstanzung zur Bildung einer magnetischen Engstelle,

FIG 4   den radialen Querschnitt durch einen Einphasen-Synchronmotor mit symmetrischem Blechschnitt, konstantem Luftspalt und in beiden Polen luftspaltseitigen Ausstanzungen zur Bildung je einer magnetischen Engstelle,

FIG 5   den radialen Querschnitt durch einen Einphasen-Synchronmotor mit symmetrischem Blechschnitt, gestuftem Luftspalt und je einer polrandseitigen Ausstanzung in jedem Pol zur Bildung einer magnetischen Engstelle,

FIG 6 das Blockschaltbild einer Regelvorrichtung zur Ansteuerung eines Einphasen-Synchronmotors über einen Wechselrichter mit Kennlinienvorgabe i = f(n) .

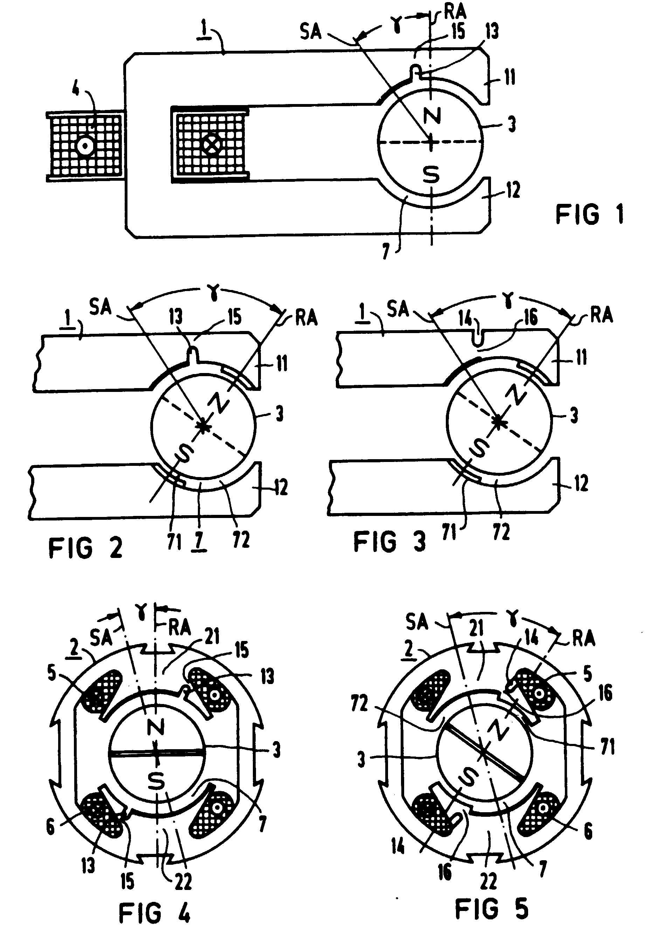

FIG 1 bis 3 zeigen einen Einphasen-Synchronmotor mit unsymmetrischem, U-förmigem Statorblechschnitt mit zwei Einzelpolen 11,12, einer Statorwicklungsspule 4 und einem permanenterregten Rotor 3 mit einem Nordpol N und einem Südpol S. Die Stellung des Rotors bzw. die Lage der Rotorfeldachse RA wird bei nicht vorhandenem Ständerfeld durch die Anordnung von Nordpol N und Südpol S sowie die Luftspaltkonfiguration bestimmt. Der Rotor 3 nimmt eine Stellung ein, in welcher der magnetische Widerstand minimal ist; daraus ergeben sich die unterschiedlichen Rotorstellungen bzw. die Lage der Rotorfeldachsen RA in FIG 1 bis 3.

FIG 1 zeigt einen Statorblechschnitt mit konstantem Luftspalt 7, so daß die Rotorfeldachse RA in Ruhestellung des Rotors durch die Mitte der Polbögen der gegenüberliegenden Pole 11,12 verläuft; FIG 2,3 zeigen einen sogenannten Stufenpol mit einem unterhalb des Polbogens verlaufenden Luftspalt 7 mit einem ersten Luftspaltteil 71 geringerer radialer Weite und einem zweiten Luftspaltteil 72 mit größerer radialer Weite. Der für die Rotorfeldachse RA in Ruhestellung maßgebliche minimale magnetische Widerstand liegt in der Mitte des Polbogens des ersten Luftspaltabschnittes 71 mit der geringeren radialen Weite.

Zur Festlegung der jeweils vorgesehenen magnetischen Engstellen 15 bzw. 16 sind in den Statorblechpaketen Ausstanzungen 13,14 vorgesehen, von denen in FIG 1,2 jeweils im Polbogen des einen Pols 11 eine luftspaltseitige Ausstanzung 13 und gemäß FIG 3 in dem einen Pol 11 eine polrandseitige randoffene Ausstanzung 14 vorgesehen sind. Durch die Ausstanzungen 13,14 ergeben sich magnetische Engstellen 15,16, durch die bei eingeschalteter Statorwicklungsspule 4 ein Statorfeldverlauf gegeben ist, dessen Verteilung über den Polbogen des Poles 11 bzw. des Poles 12 in FIG 1 bis 3 durch verstärkte Randlinierung angedeutet ist. Aufgrund dieser Statorfeldverteilung ergibt sich die jeweils in FIG 1 bis 3 eingetragene Lage der Statorfeldachse SA.

Es ist ersichtlich, daß durch die einfache Maßnahme einer Ausstanzung 13 gemäß FIG 1 ein Verdrehwinkel γ zwischen der Rotorfeldachse RA in Ruhestellung des Rotors und der Statorfeldachse SA des mit einer mangetischen Engstelle versehenen Poles und damit ein bestimmtes Anlaufmoment beim Einschalten der Ständerwicklungsspule 4 und gemäß FIG 2,3 eine Vergrößerung des Verdrehwinkels gegenüber dem durch den Stufenpol bereits gegebenen Verdrehwinkel γ erzielbar ist.

FIG 4,5 zeigen die Anwendung des vorgesehenen Prinzips auf einen zweipoligen Einphasen-Synchronmotor mit symmetrischem Blechschnitt. Wie in FIG 1 bis 3 ist ein nicht geschlossener Blechschnitt vorgesehen, derart daß die Polspitzen der Polhörner der Statorpole nicht miteinander verbunden sind.

FIG 4 zeigt einen Statorblechschnitt mit einem über den Polbogen der beiden Pole 21,22 konstanten Luftspalt 7, so daß die Rotorfeldachse RA in Ruhestellung des Rotors mittig durch die Pole 21,22 verläuft. Aufgrund der in beiden Polen 21,22 durch luftspaltseitige randoffene Ausstanzungen 13 hervorgerufenen Engstellen 15 ergibt sich die mit verstärkter Linierung eingetragene Feldverteilung über den Polbögen und der dadurch bestimmte eingetragene Verlauf der Statorfeldachse SA des jeweils mit einer magnetischen Engstelle versehenen Poles. Es ist ersichtlich, daß auch bei dem symmetrischen Statorblechschnitt gemäß FIG 4 durch die einfache Maßnahme der Ausstanzungen 13 ein für den Anlauf des Einphasen-Synchronmotors vorteilhafter Verdrehwinkel zwischen der Rotorfeldachse R und der Statorfeldachse L erzielbar ist.

Ähnlich wie bereits zu FIG 2,3 erläutert, zeigt FIG 5 die vorteilhafte Vergrößerung des durch den Stufenpol bereits vorhandenen Verdrehwinkels γ durch eine polrandseitige stirnoffene Ausstanzung 14.

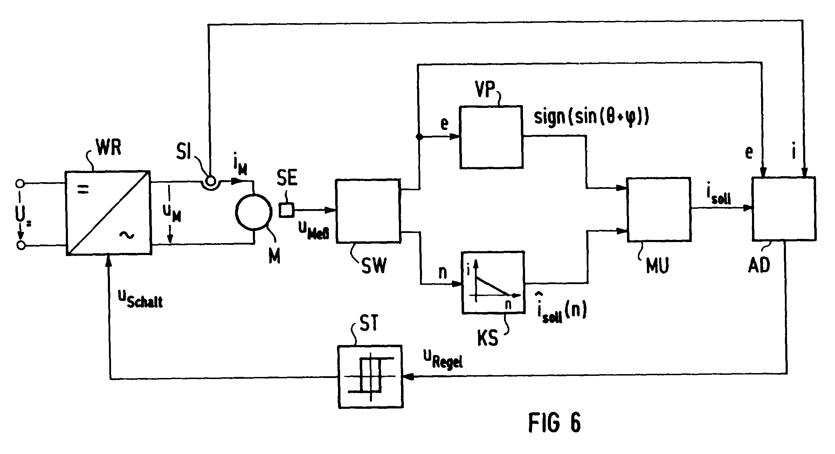

FIG 6 zeigt in einem Blockschaltbild eine vorteilhafte Regelvorrichtung zur Ansteuerung eines permanenterregten Einphasen-Synchronmotors M durch einen geregelten Wechselrichter WR mit eingeprägter eingangsseitiger Gleichspannung $U_=$; bei vorteilhaftem Einsatz des Einphasen-Synchronmotors zum Antrieb eines Kraftfahrzeug-Bordmotors kann der Wechselrichter WR direkt an das Gleichspannungs-Bordnetz angeschlossen werden. Bei vorteilhaftem Einsatz des Einphasen-Synchronmotors z.B. für ein Haushaltsgerät, insbesondere eine Geschirrspülpumpe, ist zum Anschluß an das üblicherweise speisende Einphasen-Wechselstromnetz ein Gleichspannungszwischenkreis eingangsseitig dem Wechselrichter WR vorzuschalten oder direkt ein Umrichter einzusetzen.

Entsprechend dem steuer- bzw. regelbaren ausgangsseitigen Pulsmuster des Wechselrichters WR ist der Einphasen-Synchronmotor M mit einer entsprechenden Spannung $u_M$ und einem indirekt eingeprägten Strom $i_M$ gespeist.

Als Sollwertvorgabe für die Steuerung bzw. Regelung des Wechselrichters WR und damit des Einphasen-Synchronmotors M dient ein Kennlinien-Sollwertgeber KS mit einer Vorgabe einer Strom-Drehzahl-Kennlinie i = f(n) im Sinne eines Gleichstrom-Nebenschlußmotor-Verhaltens, wobei i den, vorzugsweise maximalen, Motorstrom und n die jeweilige Motor-Drehzahl bedeuten. Bevorzugt verläuft die Kennlinie zwischen zwei Eckwerten, nämlich einerseits einem maximalen Stromwert $\hat{\imath}_{soll}$ im Kurzschluß bzw. Einschaltzustand des Motors einerseits und einem maximalen Drehzahlwert im Leerlaufzustand des Einphasen-Synchronmotors und/oder zwischen einem maximalen

Stromwert $\hat{\imath}_{soll}$ unterhalb eines Schwellwertes, bei dem der permanenterregte Rotor durch einen höheren Strom in der Statorwicklung demagnetisiert würde, einerseits und einem maximalen Drehzahlwert n im Leerlaufzustand des Einphasen-Synchronmotors andererseits.

Der jeweilige Drehzahlistwert wird über einen Signalauswerter SW aus einer drehzahlproportionalen induzierten Spannung $u_{Meß}$ eines Spannungs-Sensors SE abgeleitet, der vorteilhafterweise aus einer durch den rotierenden permanenterregten Rotor beaufschlagten Induktionsspule besteht.

In dem Signalauswerter SW wird aus der von dem Spannungs-Sensor SE abgegebenen induzierten Spannung $u_{Meß}$ außer der Rotordrehzahl n für den Kennlinien-Signalvorgeber KS als weiterer Istwert eine Spannungsgröße e abgeleitet, aus der in einem Vorzeichenberechner und Phasenschieber VP die Rotorlage zumindest soweit ermittelt werden kann, daß daraus eine für die Rotorlage vorzeichenrepräsentative Steuer- bzw. Regelgröße für den Wechselrichter ableitbar ist. Zusätzlich wird nach einer Ausgestaltung der Erfindung in vorteilhafter Weise die Phasenlage zwischen dem Motorstrom und der induzierten Spannung des Einphasen-Synchronmotors durch Vorgabe einer entsprechenden Phasenverschiebung ($\varphi$) der Motor-Wirkungsgrad verbessert.

Die Ausgangsgröße $\hat{\imath}_{soll}$ (n) des Kennlinien-Signalvorgebers KS und die Ausgangsgröße des Vorzeichenberechners und Phasenschiebers VP werden an einen Multiplizierer MU weitergegeben, der den Sollwert $i_{soll}$ des Motorstromes als Steuer- bzw. Regelgröße für den Wechselrichter WR bestimmt. In einem Addierer AD wird dann aufgrund des eingegebenen Sollwertes für den Motorstrom $i_{soll}$ und der eingegebenen Istwerte des tatsächlichen augenblicklichen, von einem Motorstromsensor SI ermittelten Motorstromes i ermittelt, die als analoges Signal in einem Schmitt-Trigger ST in ein digitales Signal $u_{Schalt}$ zur Ansteuerung des Wechselrichter WR umgewandelt wird; zur Verbesserung des Laufverhaltens des Motors kann in vorteilhafter Weise dem Addierer AD als dritte Istwertgröße die zur induzierten Motor-EMK proportionale Größe (e) zusätzlich direkt zugeführt werden; demnach ergibt sich formelmäßig:

$$u_{Re\,gel} = C_1 \cdot i_{soll} + C_2 \cdot i + e \; ;$$

dabei gilt:

$$i_{soll} = i_{soll}(n) \cdot \mathrm{sign}(\sin(\theta + \varphi)); \qquad e = C_3 \cdot n \cdot \sin\theta.$$

$$C_1 = \frac{L}{\Delta t}$$

$$C_2 = \left( R - \frac{L}{\Delta t} \right)$$

$$C_3 = \Phi.$$

($\theta$ = Rotorlagewinkel; R = Wicklungswiderstand; L = Wicklungsinduktivitat; $\Phi$ = gesamter mit Wicklung verketteter Fluß)

Zunächst wird also das zur Ansteuerung des Einphasen-Synchronmotors vorgesehene Pulsmuster des Wechselrichters abgeleitet aus dem Istwert des augenblicklichen Motorstromes und dem gemäß der Kennlinienvorgabe drehzahlabhängigen Sollwert des Motorstromes sowie unter Berücksichtigung des aus der induzierten Spannung des Rotors abgeleiteten vorzeichendefinierten Rotorstellungssignals, gegebenenfalls mit zusätzlicher Phasenverschiebung zur Verbesserung des Motorwirkungsgrades.

Die Kennlinie des Sollwertes der Motorstromamplitude in Abhängigkeit von der Drehzahl des Motors wird zweckmäßigerweise als jeweilige, dem Motor- bzw. Antriebsproblem angepaßte Größe gewählt. Eine besonders einfache Form der Anpassung ist durch einen linearen Zusammenhang zwischen Motorstrom und Drehzahl gegeben, wobei die Begrenzung des Motorstromes, vorzugsweise im Sinne eines Kurzschlußschutzes bzw. eines Demagnetisierungsschutzes festlegbar ist.

**Patentansprüche**

1.  Betriebsverfahren für einen Wechselrichter, der einen Einphasen-Synchronmotor mit permanentmagneterregtem Rotor speist, insbesondere zum Antrieb von Pumpenantrieben in Haushaltsgeräten, mit folgenden Merkmalen:

    a) Speisung über einen Wechselrichter (WR) mit steuerbarem bzw. regelbarem ausgangsseitigem Pulsmuster ($u_M$),
    b) Steuerung bzw. Regelung des Wechselrichters (WR) gemäß Vorgabe einer Strom-Drehzahl-Kennlinie ( i = f(n)), im Sinne eines Gleichstrom-Nebenschluß-Verhaltens des Einphasen-Synchronmotors, wobei die (i) den jeweiligen Motor-Strom und (n) die jeweilige Motor-Drehzahl bedeuten.

2.  Verfahren nach Anspruch 1 mit dem Merkmal:
    c) Verwendung eines Wechselrichters (WR) mit einer eingeprägten Eingangs-Gleichspannung und einer entsprechend dem steuerbaren bzw. regelbaren Pulsmuster veränderbaren Ausgangs-Wechselspannung ($u_M$).

3. Verfahren nach Anspruch 1 und/oder 2 mit dem Merkmal:
d) Steuerung bzw. Regelung gemäß einer einerseits durch einen maximalen Stromwert ($\hat{i}_{soll}$) im Kurzschluß- bzw. Einschaltzustand (n = 0) und andererseits durch einen maximalen Drehzahlwert (n) im Leerlaufzustand des Einphasen-Synchronmotors definierten Kennlinie.

4. Verfahren nach zumindest einem der Ansprüche 1-3 mit dem Merkmal:
e) Steuerung bzw. Regelung gemäß einer einerseits durch einen maximalen Stromwert ($\hat{i}_{soll}$) unterhalb eines Rotor-Demagnetisierungswertes-Schwellwertes und andererseits durch einen maximalen Drehzahlwert (n) im Leerlaufzustand des Einphasen-Synchronmotors definierten Kennlinie.

5. Verfahren nach Anspruch 3 oder 4 mit dem Merkmal:
f) Linearer Verlauf der Kennlinie ( i = f(n)) zwischen dem maximalen Stromwert im Kurzschluß- bzw. Einschaltzustand einerseits und dem Leerlaufzustand andererseits.

6. Verfahren nach zumindest einem der Ansprüche 1-5 mit dem Merkmal:
g) Steuerung bzw. Regelung des Wechselrichters (WR) in Abhängigkeit von den Istwerten des jeweiligen Motorstroms ($i_M$), der jeweiligen Rotordrehzahl (n), sowie der Rotorlage (sign (sin Θ)) relativ zum Statorfeld des Einphasen-Synchronmotors.

7. Verfahren nach Anspruch 6 mit dem Merkmal:
h) Erfassung der Rotorlage (sign (sin Θ)) und der Rotordrehzahl (n) mittels eines einzigen Spannungs-Sensors (SE), insbesondere mittels einer Induktions-Spule.

8. Verfahren nach zumindest einem der Ansprüche 1-7 mit dem Merkmal:
i) Veränderung der Phasenlage zwischen dem Motorstrom und der induzierten Spannung des Einphasen-Synchronmotors im Sinne einer Verbesserung des Motor-Wirkungsgrades.

9. Verwendung eines Einphasen-Synchronmotors in einem Verfahren nach den Ansprüchen 1-8, wobei der Motor folgendes Merkmal aufweist :
j) Ausbildung zumindest eines Poles des zumindest ein Polpaar (11,12) aufweisenden Statorblechpaketes (1 bzw. 2) mit einem Polbogenteil erhöhter lokaler Statorerregung mit entsprechend um einen Winkel (γ) gegenüber der Rotorfeldachse (RA) verdrehter Statorfeldachse (SA) durch Ausbildung einer magnetischen Engstelle (15,16).

10. Verwendung nach Anspruch 9 mit dem Merkmal:
k) Ausbildung der magnetischen Engstelle durch einen Stufenpol mit einem ersten Luftspaltteil (71) geringerer radialer Weite und einem zweiten Luftspaltteil (72) größerer radialer Weite und/oder durch Ausstanzungen (13,14) im Trennungsbereich zwischen dem Polbogenteil erhöhter Statorerregung und dem Polbogenteil nicht erhöhter Statorerregung.

## Claims

1. Method for operating an inverter feeding a single-phase synchronous motor with permanently excited rotor, in particular for driving pump drives in household appliances, having the following features:

   a) feeding via an inverter (WR) having a controllable or regulable pulse pattern ($u_M$) on the output side,
   b) controlling or regulating the inverter (WR) in accordance with a stipulated current/speed characteristic (i = f(n)) for the purpose of a DC shunt-wound behaviour of the single-phase synchronous motor, (i) denoting the respective motor current and (n) the respective motor speed.

2. Method according to Claim 1, having the feature:
c) using an inverter (WR) having an injected input DC voltage and an output AC voltage ($u_M$) which can be varied in accordance with the controllable or regulable pulse pattern.

3. Method according to Claim 1 and/or 2, having the feature:
d) controlling or regulating in accordance with a characteristic defined, on the one hand, by a maximum current value ($\hat{i}_{des}$) in the short-circuit state or on state (n = 0) and, on the other hand, by a maximum speed value (n) in the idle state of the single-phase synchronous motor.

4. Method according to at least one of Claims 1-3, having the feature:
e) controlling or regulating in accordance with a characteristic defined, on the one hand, by a maximum current value ($\hat{i}_{des}$) below a rotor demagnetization value threshold and, on the other hand, by a maximum speed value (n) in the idle state of the single-phase synchronous motor.

5. Method according to Claim 3 or 4, having the feature
f) a linear profile of the characteristic (i = f(n)) between the maximum current value in the short-circuit state or on state, on the one hand, and the idle state, on the other hand.

6. Method according to at least one of Claims 1-5, having the feature:
g) controlling or regulating the inverter (WR) as a function of the actual values of the respective motor current ($i_M$), the respective rotor speed (n), and the rotor position (sign (sin θ)) relative to the stator field of the single-phase synchronous motor.

7. Method according to Claim 6, having the feature:
h) detecting the rotor position (sign (sin θ)) and the rotor speed (n) by means of a single voltage sensor (SE), in particular by means of an induction coil.

8. Method according to at least one of Claims 1-7, having the feature:
i) varying the phase angle between the motor current and the induced voltage of the single-phase synchronous motor for the purpose of improving the motor efficiency.

9. Use of a single-phase synchronous motor in a method according to Claims 1-8, the motor having the following feature:
j) using the formation of a magnetic constriction (15, 16) to form at least one pole of the stator laminated core (1 or 2), which has at least one pole pair (11, 12), with a pole arc part of increased local stator excitation which has a stator field axis (SA) appropriately rotated by an angle (γ) with respect to the rotor field axis (RA).

10. Use according to Claim 9, having the feature:
k) forming the magnetic constriction by means of a stepped pole having a first air gap part (71) of smaller radial width and a second air gap part (72) of larger radial width and/or by means of stamped-out parts (13, 14) in the boundary region between the pole arc part of increased stator excitation and the pole arc part not of increased stator excitation.

**Revendications**

1. Procédé pour faire fonctionner un onduleur, qui alimente un moteur synchrone monophasé à rotor excité par aimant permanent, notamment pour l'entrainement de dispositifs d'entrainement d'une pompe dans des appareils ménagers, ayant les caractéristiques suivantes :

a) alimentation par l'intermédiaire d'un onduleur (WR) à motif ($u_M$) d'impulsions de sortie pouvant être commandé et réglé,
b) commande et régulation de l'onduleur (WR) suivant la prescription d'une caractéristique courant-vitesse de rotation (i = f(n)), en vue d'obtenir un comportement de couplage en dérivation en courant continu du moteur synchrone monophasé, (i) désignant le courant du moteur et (n) désignant la vitesse de rotation du moteur.

2. Procédé suivant la revendication 1 ayant la caractéristique :
c) utilisation d'un onduleur (WR) ayant une tension continue d'entrée indépendante et une tension alternative de sortie ($u_M$) pouvant être changée en fonction du motif d'impulsion pouvant être commandé ou pouvant être réglé.

3. Procédé suivant la revendication 1 et/ou 2 ayant la caractéristique :
d) commande et régulation suivant une caractéristique définie d'une part par une valeur de courant maximale ($\hat{i}_{soll}$) dans l'état du court circuit ou de branchement (n = 0) et d'autre part par une valeur (n) de vitesse de rotation maximale dans l'état d'un circuit ouvert du moteur synchrone monophasé.

4. Procédé suivant au moins l'une des revendications 1 à 3 ayant la caractéristique :
e) commande et régulation suivant une caractéristique définie d'une part par une valeur maximale du courant ($\hat{i}_{soll}$) en-dessous d'une valeur de seuil de démagnétisation du rotor et d'autre part par une valeur maximale (n) de vitesse de rotation dans l'état en circuit ouvert du moteur synchrone monophasé.

5. Procédé suivant la revendication 3 ou 4 ayant la caractéristique :
f) courbe linéaire de la caractéristique (i = f (n)) entre la valeur maximale du courant dans l'état du court-circuit ou de branchement d'une part et l'état de circuit ouvert d'autre part.

6. Procédé suivant au moins l'une des revendications 1 à 5 ayant la caractéristique :
g) commande et régulation de l'onduleur (WR) en fonction des valeurs réelles du courant ($i_M$) du moteur, de la vitesse (n) de rotation du rotor ainsi que de la position (sign (sin θ) ) du rotor par rapport au champ du stator du moteur synchrone monophasé.

7. Procédé suivant la revendication 6 ayant la caractéristique :
h) détection de la position (sign (sin θ) ) du rotor et de la vitesse (n) de rotation du rotor au moyen d'un unique capteur (SE) de tension, notamment au moyen d'une bobine à induction.

8. Procédé suivant au moins l'une des revendications 1 à 7 ayant la caractéristique :
i) modification de la position de phase entre le courant du moteur et la tension induite du moteur synchrone monophasé en vue d'une amélioration du rendement du moteur.

9. Utilisation d'un moteur synchrone monophasé dans un procédé suivant les revendications 1 à 8, dans laquelle le moteur a la caractéristique suivante :
j) formation d'au moins un pôle du paquet (1 et 2) de tôles du stator comportant au moins une paire (11,12) de pôles par une partie d'arc polaire d'excitation locale de stator accrue, avec un axe (SA) de champ de stator tourné de manière correspondante d'un angle (γ) par rapport à l'axe (RA) du champ de rotor par formation d'un point d'étranglement magnétique (15,16).

10. Utilisation suivant la revendication 9 ayant la caractéristique :
k) formation du point d'étranglement magnétique par un pôle à gradin comportant une première partie (71) d'entrefer de petite largeur radiale et une seconde partie (72) d'entrefer de plus grande largeur radiale et/ou par des estampages (13,14) dans la zone de séparation entre la partie d'arc polaire d'excitation de stator accrue et la partie d'arc polaire n'ayant pas une excitation de stator accrue.

FIG 1

FIG 2

FIG 3

FIG 4

FIG 5

FIG 6